# EUROPEAN PATENT SPECIFICATION

(11) **EP 4 047 242 B1**
(45) Date of publication and mention of the grant of the patent: **26.11.2025**
(21) Application number: 20877193.1
(22) Date of filing: 13.10.2020
(51) Int. Cl.: F16H 3/50, B60B 27/04, B60K 17/04, F16H 63/30

(54) **WHEEL HUB FOR MOUNTING A WHEEL ON AN AXLE OF A WORK VEHICLE**
RADNABE ZUM MONTIEREN EINES RADES AUF EINER ACHSE EINES ARBEITSFAHRZEUGS
MOYEU DE ROUE POUR MONTER UNE ROUE SUR UN AXE D'UN VÉHICULE DE TRAVAIL

(30) Priority: 16.10.2019 BR 102019021705
(43) Date of publication of application: 24.08.2022
(73) Proprietor: IVECO S.P.A., 10156 Torino (IT)
(72) Inventor: PEREIRA DE LEMOS, José Francivaldo, 35700-187 Sete Lagoas (BR)
(74) Representative: Studio Torta S.p.A.
(86) International application number: PCT/BR2020/050405
(87) International publication number: WO 2021/072518

(56) References cited:
- WO-A1-2016/110823
- WO-A1-2016/110823
- WO-A1-2018/107257
- WO-A1-2018/107257
- WO-A1-2018/107258
- WO-A1-2018/107258
- BR-A- PI0 400 810
- CN-A- 110 217 096
- CN-U- 208 439 006
- CN-U- 208 919 226
- DE-A1- 2 338 193
- US-A- 6 117 040
- US-A1- 2007 117 672
- US-B2- 9 956 870

## Description

### FIELD OF THE INVENTION

The present invention relates to wheel hubs of a work vehicle, specifically, to a reduction system for a wheel hub.

### BACKGROUND OF THE INVENTION

A work vehicle, such as a large truck, generally includes a chassis, a suspension system, an engine to provide a driving force, a transmission, and a drive train, which includes at least three axles with wheels attached. For example, the work vehicle may include a front steering axle and a pair of rear tandem axles to increase the load bearing and towing capacity of the work vehicle. To accommodate various driving conditions, the work vehicle drive train may include multiple clutches to drive one or more rear axles and gearboxes to provide one or more speed reductions between the engine and the wheels.

The drive train of the work vehicle may have multiple traction, i.e. drive configurations, such as a 4x2, 6x2, 6x4, 6x6, 8x4, 8x8 or 10x8 drive configuration, due to the various clutches that selectively (dis)connect the driving force to the axles. For example, a work vehicle with a 6x4 drive configuration may include an undriven steerable front axle and a pair of rear tandem or individual axles. Therefore, when the work vehicle is towing a payload, such as a semi-trailer loaded with goods, both rear axles can be driven to increase the towing capabilities of a work vehicle, and when the work vehicle is on a return trip with no payload, only one of the rear axles can be driven to increase fuel economy. Additionally, in other circumstances, for example when towing a heavy load uphill, it may be desirable to provide a driving force to all three axles of the work vehicle in a 6x6 drive configuration to increase traction.

The work vehicle may also provide one or more speed reductions between the engine and the wheels in order to reduce wheel speed and increase engine torque. For example, a reduction system may be provided for each wheel hub of the respective axle. The reduction system may include a planetary gearbox operably connected between the differential drive shaft and the wheel hub. Typically, the reduction ratio between the drive shaft and the wheel hub is fixed, for example at a 2:1 reduction. However, some reduction systems include a selectively engaging planetary gearbox that allows full disengagement as well as a variable reduction ratio.

Document WO 2016/110823 A1 discloses a wheel hub, falling within the wording of the pre-characterizing portion of claim 1, and describes a wheel hub reduction system with a single piston and a sliding sleeve for selectively engaging a planetary gearbox with the wheel hub in two indexed positions, which results in a reduction ratio of 2:1 or 1:1 between the drive shaft and the wheel hub. In this way, the speed reduction at the wheels can be appropriately matched with the loading of the work vehicle.

WO 2018/107258 A1 describes a reduction system with a two-piston system and a sliding sleeve for selectively engaging and disengaging a planetary gearbox to/from the wheel hub. The reduction system can completely disengage the driving force from the wheel hub and provides a reduction ratio of 2:1 or 1:1. In this way, the reduction system can accommodate a wider spectrum of operating positions, and the full disengagement position can substantially increase the work vehicle's fuel economy. However, the two-piston system can increase manufacturing and operating costs.

Other known reduction systems for a wheel hub are disclosed by publications DE2338193 A1 or WO 2018/107257 A1.

What is needed is a cost-effective wheel hub reduction system to accommodate various types of drive conditions.

### DESCRIPTION OF THE INVENTION

The aforementioned aims are solved by a wheel hub as claimed in the appended set of claims.

A possible advantage of a work vehicle comprising a wheel hub according to claim 1 is that the reduction system can accommodate various drive conditions of the work vehicle to selectively increase or decrease wheel torque and traction.

A further possible advantage of a work vehicle comprising a wheel hub according to claim 1 is that the reduction system can substantially increase the fuel economy of the work vehicle.

### BRIEF DESCRIPTION OF THE FIGURES

For the purpose of illustration, the figures show certain embodiments of the present invention. It should be understood, however, that the invention is not limited to the precise arrangements, dimensions and instruments shown. The same numbers refer to the same features in the figures. In the figures:
- Figure 1 illustrates a side view of one embodiment of a work vehicle, the work vehicle comprising a rear tandem axle assembly, according to one embodiment of the present invention;
- Figure 2 illustrates a cross-section view of a wheel hub with a housing and a reduction system, in which the reduction system is in the 2:1 speed ratio reduction operating position, according to one embodiment of the present invention; and
- Figure 3 illustrates a cross-section view of a wheel hub from Figure 2, where the reduction system is in the 1:1 speed ratio operating position;
- Figure 4 illustrates a cross-section view of a wheel hub with a housing and a tilted reduction system, in which the reduction system is in the 2:1 speed ratio reduction operating position, according to one embodiment of the present invention; and
- Figure 5 illustrates a cross-section view of a wheel hub from Figure 4, in which the reduction system is in the 1:1 speed ratio operating position;
- Figure 6 illustrates a cross-section view of another embodiment of a wheel hub with a housing and a tilted reduction system, in which the reduction system is in the 1.7:1 speed ratio reduction operating position, according to one embodiment of the present invention; and
- Figure 7 illustrates a cross-section view of a wheel hub from Figure 6, in which the reduction system is in the 1:1 speed ratio operating position.

### DESCRIPTION OF EMBODIMENTS OF THE INVENTION

The terms "front", "rear", "left" and "right" used in connection with a vehicle and/or components thereof are generally determined with reference to the forward direction of travel of a vehicle and are not to be construed as limiting. The terms "longitudinal" and "transverse" are determined with reference to the forward and rearward direction of the vehicle and are not to be construed as limiting.

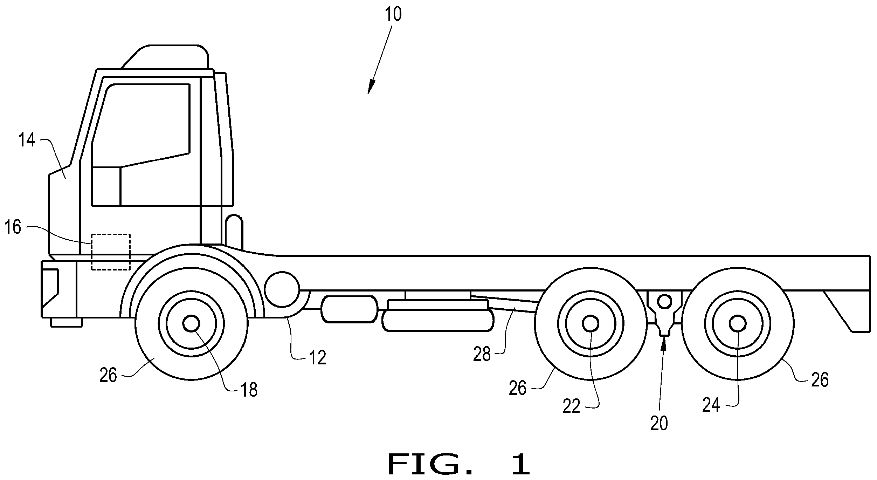

Referring now to the figures, and more particularly to Figure 1, a work vehicle 10 is shown which typically includes a chassis 12, a cab 14 for an operator, a main engine 16, for example, a diesel engine 16, a front axle 18, a rear axle assembly 20 with at least two axles 22, 24, wheels 26 attached to the axles 18, 22, 24, and a drive system including a transmission, that accompanies a gearbox(es), and a main drive shaft 28 for transmitting driving force, i.e., drive torque, from the engine 16 to the rear axle assembly 20 to provide primary traction for the work vehicle 10. The front wheels 26 of the front axle 18 are normally configured to be steered to provide directional control for the work vehicle 10. The engine 16, via the transmission system, may drive the wheels 26 of any axle 18, 22, 24. The work vehicle 10 may have any desired drive configuration, such as a 4x2, 6x6, 6x4, 6x2, 8x8, 8x4, or 10x6 drive configuration. The work vehicle 10 may be in the form of any desired vehicle 10, such as a heavy/large truck or bus. For example, the work vehicle 10 may be a commercial truck, up to 45 tons, with a 4x2 or 6x2 drive configuration.

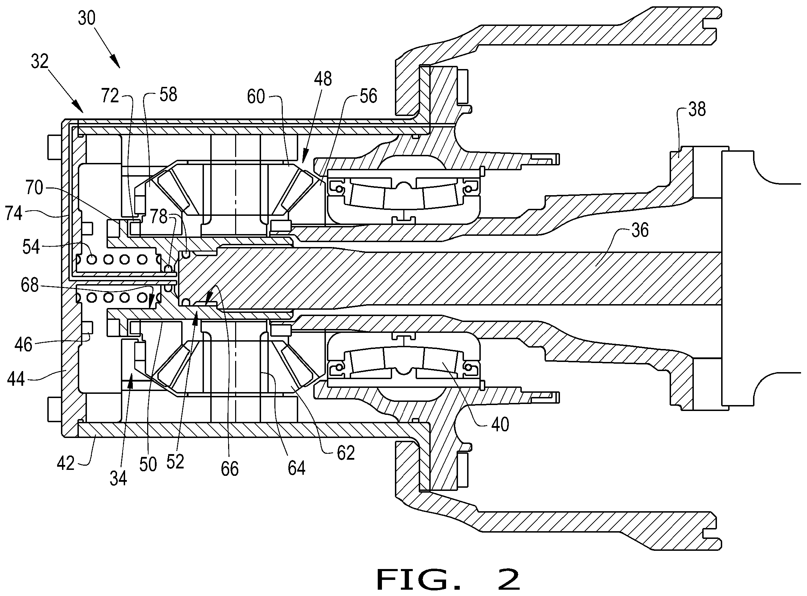

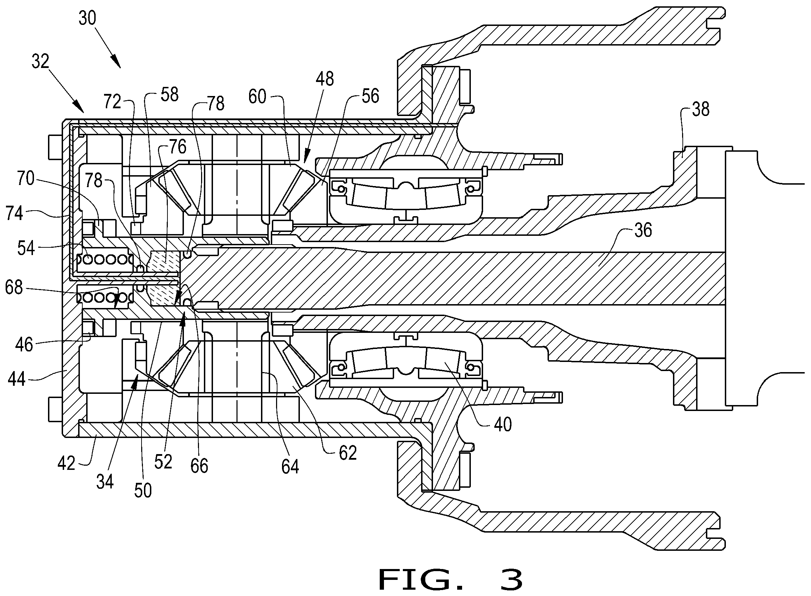

Referring now to Figures 2 and 3 collectively, a wheel hub 30 for the work vehicle 10 is shown. The wheel hub 30 may generally include a housing 32 and a reduction system 34 arranged within the housing 32. The reduction system 34 has a first reduction operating position to provide a reduction in speed ratio, such as a 2:1 reduction, between a drive axle? 36, for example, the drive shaft 36 extending from a rear differential of the respective axle 22, and the wheels 26 (Figure 2). The reduction system 34 also has a second, non-reduction operating position to transmit the driving force from the axle 36 to the wheels 26 at a 1:1 speed ratio (Figure 3). Accordingly, the reduction system 34 may selectively choose the appropriate speed ratio or disengagement position to appropriately accommodate an operating condition of the work vehicle 10, for example, fully loaded, partially loaded or unloaded. For example, when the work vehicle 10 is fully loaded, the reduction system 34 may provide the speed ratio reduction 2:1 in its reduction position to increase torque and force to the wheels 26 or, alternatively, when the work vehicle 10 is unloaded, the reduction system 34 may provide the speed ratio 1:1 in its non-reduction position to significantly increase the fuel economy of the work vehicle 10. As can be appreciated, one or more of the front and/or rear axles 18, 22, 24 may include the wheel hubs 30.

The housing 32 of the wheel hub 30 is connected to the housing 38 of the drive shaft 36 by means of bearings 40. The housing 32 includes a cylindrical portion 42 and a side end cap 44 connected to the cylindrical portion 42. The inner surface of the side end cap 44 may include a tooth 46. It should be appreciated that the housing 32 may have any desired shape and may comprise any desired material.

The reduction system 34 may generally include a planetary gearbox 48, a sliding sleeve 50, and an actuation device 52 for sliding the sleeve 50 between the reduction and non-reduction operating positions to engage the planetary gearbox 48 and the end cap 44, respectively. The reduction system 34 may also include a tensioning element 54 for tilting the bushing 50 to be engaged with the planetary gearbox 48.

The planetary gearbox 48 is operably connected between the axle 36 and the wheels 26. The planetary gearbox 48 may be located within the housing 32 The planetary gearbox 48 may generally include a fixed gear 56, a moving gear 58, at least two intermediate gears 60, 62 positioned between the central fixed and moving gears 56, 58, and a planetary carrier 64 for carrying the gears 60, 62. The inner fixed gear 56 may be securely attached to the housing 38 of the drive shaft 36. The outer movable gear 58, e.g., central gear 58, may be movably mounted within the housing 32 of the wheel hub 30 via the bearing and/or a designated planetary liner. The intermediate gears 60, 62 are in the form of satellite or planetary gears 60, 62 which are operably connected between and rotate relative to the fixed and movable central gears 56, 58. In the present embodiment, the planetary gearbox 48 includes four planetary gears 60, 62. The gears 56, 58, 60, 62 may be bevel gears; however, the gears 56, 58, 60, 62 may have any desired configuration. The planetary carriers 64 have a receiving orifice that at least partially receives the sleeve 50. The planetary carrier 64 may be in the form of any desired key, fork or gear carrier. As used herein, the term planetary gearbox 48 broadly refers to the central planetary device which transmits force from the drive shaft 36 to the wheels 26. It should be appreciated that the planetary gearbox 48 can be configured in various ways so as to have any desired number and size of gears.

The sleeve 50 is selectively connectable to the planetary gearbox 48 and the end cap 44 of the housing 32 in order to provide the two different speed ratios 2:1 and 1:1, respectively, between the drive shaft 36 and the wheels 26. The sleeve 50 has a first inner bore 66 and a second outer bore 68 that is coaxial with and oriented opposite the first bore 66. The sleeve 50 also has at least one group of teeth 70 which are circumferentially arranged around the outer perimeter of the sleeve 50. The teeth 70 of the sleeve 50 selectively engage with the corresponding teeth on the central gear 58 of the planetary gearbox 48 in the reduction operating position, and the teeth 46 of the end cap 44 of the housing 32, in the non-reduction operating position. As can be appreciated, the sleeve 50 may include one, two or more tooth groups 70 that engage with the planetary gearbox 48 and the housing 32, respectively. The sleeve 50 does not operably engage with the carrier 64 by means of designated grooves or teeth in order to transmit driving force through same, and thus, the sleeve 50 can rotate and slide independently in relation to the carrier 64. Accordingly, when the driving force is transmitted through the planetary gearbox 48 in the reduction position, the driving force passes from the axle 36 through the sleeve 50, the outer central gear 58 which is completely coupled to the sleeve 50, the planetary gears 60, 62, and the inner fixed gear 56, and finally out of the housing 32 of the wheel hub 30 by means of the bearings 40. Additionally, in the non-reduction operating position, the driving force is completely diverted from the planetary gearbox 34 while the sleeve 50 is completely connected to the housing 32 by means of the end cap 44.

The first bore 66 turns and opens towards the drive shaft cap 36, and the second bore 68 turns and opens towards the inner surface of the end cap 44. The first bore 66 is associated with the actuation device 52 and receives a cap of the drive shaft 36. It should be appreciated that the bore 66 may have an internal groove or teeth to engage with the corresponding engagement members on the axle 36. The second bore 68 receives at least a portion of the tensioning element 54. The bores 66, 68 may have multiple inner sections with different diameters. The bores 66, 68 may be mirror elements in which the sleeve is substantially symmetrical, or the bores 66, 68 may differ from each other in diameter, depth, and cross-section shape.

The actuation device 52 is operably connected to the sleeve 50. The actuation device 52 includes a fluid line 74 and an internal fluid chamber 76 which is fluidly connected to the fluid line 74 (Figure 3). Since the first bore 66 of the sleeve 50 is connected to form a seal with? the fluid line in a receiving (separated) bore and the axle cap 34 by means of respective seals 78, the internal space of the first bore 66 defines the fluid chamber 76. In this way, the sleeve 50 is therefore slid in and out by emptying and filling the fluid chamber 76. In essence, the fluid chamber 76 as defined by the first bore 66 acts as a fluid piston to drive the sleeve 50. In operation, in the 2:1 reduction operating position, the fluid chamber 76 is emptied of fluid so that the force of the tensioning element 54 engages the sleeve 50 with the planetary gearbox 48 (Figure 2), and, in the 1:1 non-reduction operating position, the fluid chamber 76 is filled with fluid so that the force of the fluid within the fluid chamber 76 exceeds the force of the tensioning element 54 and engages the sleeve 50 with the teeth 46 of the end cap 44 (Figure 3). The fluid line 74 extends through the end cap 44, centrally through the tensioning element 54 and the second bore 68, and into the receiving orifice of the sleeve 50 to consequently fill or empty the fluid chamber 76. The fluid line 74 may be in the form of a designated hose pipe or a series of conduits, for example slots, within the wheel hub 30. As should be appreciated, seals 78 may be in the form of any desired seal, such as a rubber O-ring, seal, etc. The actuation device 52 is illustrated as a pneumatic control device, however the actuation device 52 may utilize any desired fluid. It should be appreciated that the actuation device 52 may further include an air pump, a compressor, various valves, and/or an accumulator. The actuation device 52 may also be operably connected to a control system within the cab of the work vehicle 10 so that the operator may enter a user command within the control system to consequently switch between the desired speed ratio.

The tensioning element 54 is at least partially housed within the second bore 68 of the sleeve 50. The tensioning element 54 is then connected between and acts on the end cap 44 and the sleeve 50. The tensioning element 54 is configured to tilt the sleeve 50 to be engaged with the planetary gearbox 48 in the 2:1 reduction operating position. The tensioning element 54 is external to the fluid chamber 76. The tensioning member 54 may be in the form of any desired tensioning member 54, such as a coil spring 54.

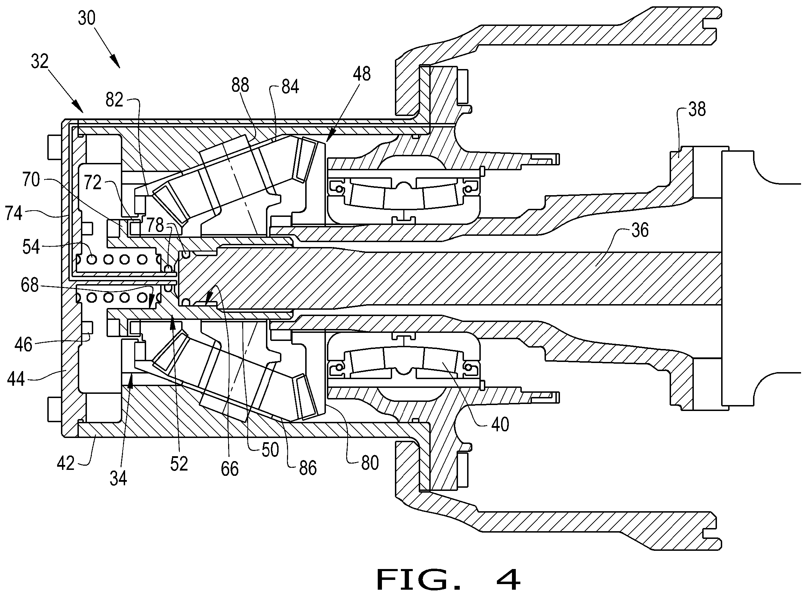

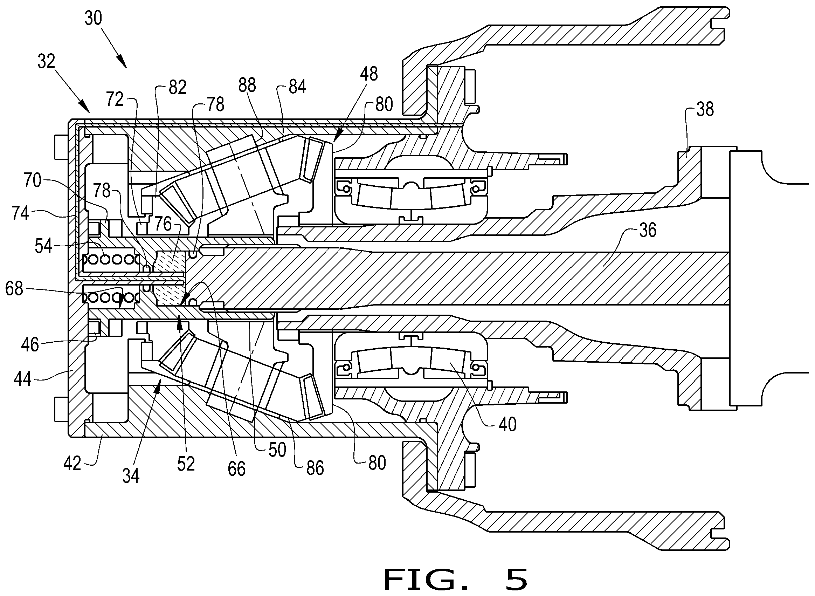

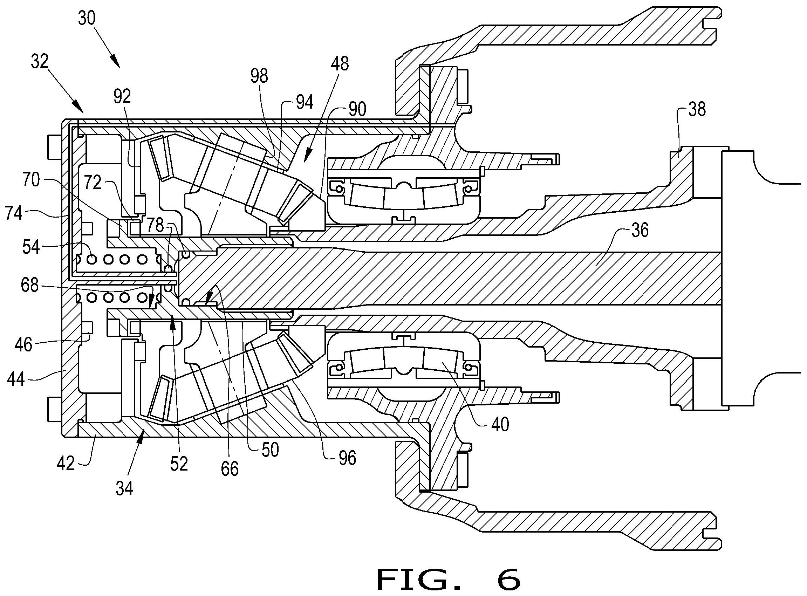

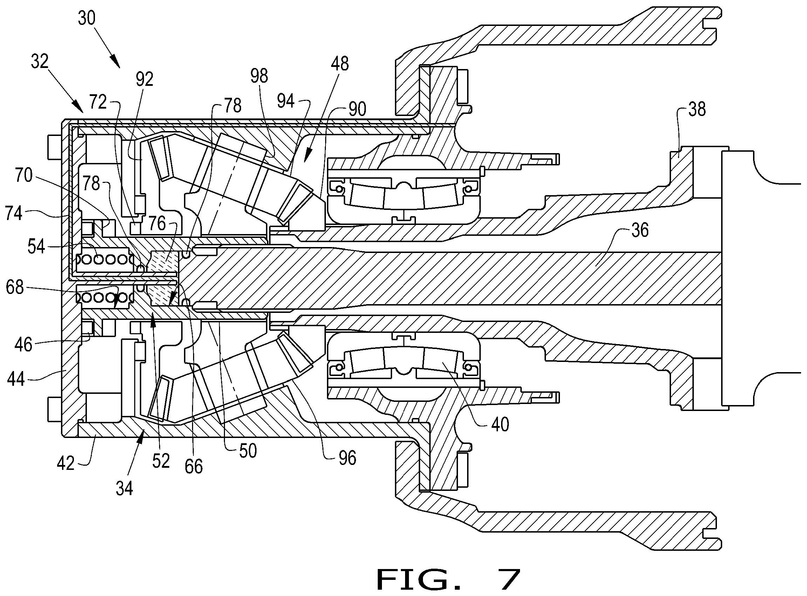

With reference now to Figures 4 to 7, these show two alternative embodiments of the reduction systems 34 with planetary gearboxes 48 with differently sized, fixed and moving central gears 80, 82, 90, 92 and inclined planetary gears 84, 86, 94, 96 with inclined planetary carriers 88, 98 to provide an alternative speed reduction ratio to the 2:1 speed reduction ratio of the horizontally arranged planetary gears 60, 62 as discussed above. Accordingly, the speed reduction ratio can be efficiently altered by changing the position and/or size of the gears within the planetary gearbox 48 without altering or changing the housing 32 of the wheel hub 30. As shown in Figure 4, the central gears 80, 82 and the tilted ones, e.g. inclined planetary gears 84, 86 provide a speed reduction ratio of 2.7:1. As shown in Figure 6, the central gears 90, 92 and the tilted ones, e.g. declined planetary gears 94, 96 provide a speed reduction ratio of 1.7:1. It should be appreciated that the planetary gearboxes 48 can achieve any desired speed reduction ratio. As can be appreciated, even with an inclined gear, the reduction system 34 can still provide the 1:1 speed reduction ratio when the sleeve 50 is engaged with the end cap 44 of the housing 32. Identical components have been identified with identical reference characters across the various views.

## Claims

1. Wheel hub (30) for mounting a wheel (26) on an axle (36) of a work vehicle (10) which comprises:
- a housing (32) comprising an end cap (44); and
a reduction system (34) comprising:
- a planetary gearbox (48) configured to be operably connected between the axle (36) and the housing (32);
- a sleeve (50) configured to connect in a sliding manner to the axle (36); and
- an actuation device (52) configured to slide the sleeve (50), whereby
- the reduction system (34) has a first operating position in which the sleeve (50) engages with the planetary gearbox (48) to transmit the driving force from the axle (36) at a first speed ratio, and a second operating position in which the sleeve (50) disengages from the planetary gearbox (48) and engages with the end cap (44) of the housing (32) in order to transmit the driving force from the axle (36) at a second speed ratio which is 1:1,
wherein the sleeve (50) comprises a first bore (66) associated with the actuation device (52) and a second bore (68) coaxial to the first bore (66), wherein the first bore (66) is configured to receive an end of an axle (36) so that the sleeve (50) operably engages with and slides relative to the axle (36), and the second bore (68) is oriented opposite the first bore (66) and runs towards an inner surface of the end cap (44) of the housing (32),
wherein the actuation device (52) comprises a fluid line (74) and an internal fluid chamber (76) located within the housing (32) and fluidly connected to the fluid line (74),
**characterized in that** the first bore (66) of the sleeve (50) is connected to the fluid line (74) and a seal (78) is arranged between the fluid line (74) and a further bore within the sleeve (50), and the fluid chamber (76) is defined by the first bore (66) and an end of the axle (36) so that filling or emptying of the fluid chamber (76) slides the sleeve (50).

2. Wheel hub according to claim 1, wherein the reduction system (34) further comprises a tensioning member (54) which is at least partially housed within the second bore (68) and connected between the end cap (44) and the sleeve (50) and the tensioning member (54) is configured to tension the sleeve (50) in a direction in which it may engaged with the planetary gearbox (48).

3. Wheel hub according to claim 2, wherein the tensioning element (54) is a coil spring (54).

4. Wheel hub according to claim 2 or claim 3, wherein the sleeve (50) also comprises a receiving orifice to receive the fluid line (74), the receiving orifice being connected fluidly to the first bore (66) so that the fluid chamber (76) is connected fluidly to the fluid line (74); in the first operating position the fluid chamber (76) is emptied of fluid so that a force of the tensioning element (54) engages the sleeve (50) with the planetary gearbox (48); and in the second operating position the fluid chamber (76) is filled with fluid so that the force of the fluid within the fluid chamber (76) overcomes the force of the tensioning element (54) and engages the sleeve (50) with the end cap (44).

5. Wheel hub according to claim 4, wherein the fluid line (74) extends through the end cap (44) of the housing (32), centrally through the tensioning element (54) and the second bore (68), and into the orifice receiving the sleeve (50) to consequently fill or empty the fluid chamber (76).

6. Wheel hub according to any of the preceding claims, wherein the sleeve (50) comprises at least one group of teeth (70), arranged circumferentially around the outer perimeter of the sleeve (50), for selectively engaging with the planetary gearbox (48) in the first operating position and with the end cap (44) of the housing (32) in the second operating position.

7. Wheel hub according to any one of the preceding claims, wherein the planetary gearbox (48) comprises a gear (56, 80 90), a mobile gear (58, 82, 92), at least two planetary gears (60, 62, 84, 86, 94, 96)), and a carrier (64, 88, 98) for carrying the at least two planetary gears (60, 62, 84, 86, 94, 96), and the carrier (64, 88, 98) comprises a receiving orifice to at least partially receive the sleeve (50).

8. Wheel hub, according to claim 7, wherein the sleeve (50) does not operably engage with the carrier (64, 88, 98) by means of designated grooves or teeth in order to transmit the driving force through the same so that the sleeve (50) can rotate and slide independently in relation to the carrier (64, 88, 98), and in the first operating position the sleeve (50) fully engages with the moving gear (58, 82, 92) to transmit the driving force through the planetary gearbox (48).

9. Wheel hub, according to any of the preceding claims, wherein the first speed ratio of the first operating position is 2:1, 2.7:1 or 1.7:1.

10. Wheel hub, according to claim 9, wherein the planetary gearbox (48) comprises planetary gears (60, 62), and the first speed ratio is 2:1., whereby the rotation axis of each planetary gear (50, 62) is arranged perpendicular to the rotation axis of the axle (36).

11. Wheel hub according to claim_9, wherein the planetary gearbox (48) comprises planetary gears (84, 86, 94, 96), and the first speed ratio is 2.7:1 or 1.7:1, whereby the rotation axis of each planetary gears (84, 86, 94, 96) is arranged tilted with regard to the rotation axis of the axle (36).

## Patentansprüche

1. Radnabe (30) zum Montieren eines Rads (26) an einer Achse (36) eines Arbeitsfahrzeugs (10), die Folgendes umfasst:
- ein Gehäuse (32), das eine Endkappe (44) umfasst; und
ein Untersetzungssystem (34), das Folgendes umfasst:
- ein Planetengetriebe (48), das konfiguriert ist, zwischen der Achse (36) und dem Gehäuse (32) operativ verbunden zu sein;
- eine Hülse (50), die konfiguriert ist, gleitend mit der Achse (36) verbunden zu sein; und
- eine Betätigungsvorrichtung (52), die konfiguriert ist, die Hülse (50) zu verschieben, wobei
- das Untersetzungssystem (34) eine erste Betriebsposition, in der die Hülse (50) mit dem Planetengetriebe (48) in Eingriff steht, um die Antriebskraft von der Achse (36) bei einem ersten Drehzahlverhältnis zu übertragen, und eine zweite Betriebsposition aufweist, in der die Hülse (50) von dem Planetengetriebe (48) außer Eingriff steht und mit der Endkappe (44) des Gehäuses (32) in Eingriff steht, um die Antriebskraft von der Achse (36) bei einem zweiten Drehzahlverhältnis zu übertragen, das 1:1 beträgt,
wobei die Hülse (50) eine erste Bohrung (66), die der Betätigungsvorrichtung (52) zugeordnet ist, und eine zweite Bohrung (68) koaxial zu der ersten Bohrung (66) umfasst, wobei die erste Bohrung (66) konfiguriert ist, ein Ende einer Achse (36) aufzunehmen, sodass die Hülse (50) operativ mit der Achse (36) in Eingriff steht und relativ zu dieser gleitet, und die zweite Bohrung (68) gegenüberliegend zur ersten Bohrung (66) ausgerichtet ist und zu einer Innenfläche der Endkappe (44) des Gehäuses (32) verläuft,
wobei die Betätigungsvorrichtung (52) eine Fluidleitung (74) und eine interne Fluidkammer (76) umfasst, die sich innerhalb des Gehäuses (32) befindet und mit der Fluidleitung (74) fluidisch verbunden ist,
**dadurch gekennzeichnet, dass** die erste Bohrung (66) der Hülse (50) mit der Fluidleitung (74) verbunden ist und eine Dichtung (78) zwischen der Fluidleitung (74) und einer weiteren Bohrung innerhalb der Hülse (50) angeordnet ist und die Fluidkammer (76) durch die erste Bohrung (66) und ein Ende der Achse (36) definiert ist, sodass das Füllen oder Leeren der Fluidkammer (76) die Hülse (50) verschiebt.

2. Radnabe nach Anspruch 1, wobei das Untersetzungssystem (34) ferner ein Spannelement (54) umfasst, das zumindest teilweise innerhalb der zweiten Bohrung (68) untergebracht ist und zwischen der Endkappe (44) und der Hülse (50) verbunden ist und das Spannelement (54) konfiguriert ist, die Hülse (50) in eine Richtung zu spannen, in der sie mit dem Planetengetriebe (48) in Eingriff geraten kann.

3. Radnabe nach Anspruch 2, wobei das Spannelement (54) eine Schraubenfeder (54) ist.

4. Radnabe nach Anspruch 2 oder Anspruch 3, wobei die Hülse (50) ferner eine Aufnahmeöffnung zur Aufnahme der Fluidleitung (74) umfasst, welche Aufnahmeöffnung mit der ersten Bohrung (66) fluidisch verbunden ist, sodass die Fluidkammer (76) mit der Fluidleitung (74) fluidisch verbunden ist; in der ersten Betriebsposition die Fluidkammer (76) von Fluid geleert ist, sodass eine Kraft des Spannelements (54) die Hülse (50) mit dem Planetengetriebe (48) in Eingriff bringt; und in der zweiten Betriebsposition die Fluidkammer (76) mit Fluid gefüllt ist, sodass die Kraft des Fluids innerhalb der Fluidkammer (76) die Kraft des Spannelements (54) überwindet und die Hülse (50) mit der Endkappe (44) in Eingriff bringt.

5. Radnabe nach Anspruch 4, wobei sich die Fluidleitung (74) durch die Endkappe (44) des Gehäuses (32), mittig durch das Spannelement (54) und die zweite Bohrung (68) und in die Öffnung erstreckt, die die Hülse (50) aufnimmt, um folglich die Fluidkammer (76) zu füllen oder zu leeren.

6. Radnabe nach einem der vorhergehenden Ansprüche, wobei die Hülse (50) mindestens eine Gruppe von Zähnen (70) umfasst, die in Umfangsrichtung um den Außenumfang der Hülse (50) angeordnet sind, um selektiv mit dem Planetengetriebe (48) in der ersten Betriebsposition und mit der Endkappe (44) des Gehäuses (32) in der zweiten Betriebsposition in Eingriff zu gelangen.

7. Radnabe nach einem der vorhergehenden Ansprüche, wobei das Planetengetriebe (48) ein Zahnrad (56, 80, 90), ein bewegliches Zahnrad (58, 82, 92), mindestens zwei Planetenräder (60, 62, 84, 86, 94, 96) und einen Träger (64, 88, 98) zum Tragen der mindestens zwei Planetenräder (60, 62, 84, 86, 94, 96) umfasst und der Träger (64, 88, 98) eine Aufnahmeöffnung umfasst, um die Hülse (50) zumindest teilweise aufzunehmen.

8. Radnabe nach Anspruch 7, wobei die Hülse (50) nicht operativ mit dem Träger (64, 88, 98) mittels bestimmter Nuten oder Zähne in Eingriff steht, um die Antriebskraft durch diese zu übertragen, sodass die Hülse (50) sich unabhängig in Bezug auf den Träger (64, 88, 98) drehen und verschieben kann, und in der ersten Betriebsposition die Hülse (50) vollständig mit dem beweglichen Zahnrad (58, 82, 92) in Eingriff steht, um die Antriebskraft durch das Planetengetriebe (48) zu übertragen.

9. Radnabe nach einem der vorhergehenden Ansprüche, wobei das erste Drehzahlverhältnis der ersten Betriebsposition 2:1, 2,7:1 oder 1,7:1 beträgt.

10. Radnabe nach Anspruch 9, wobei das Planetengetriebe (48) Planetenräder (60, 62) umfasst und das erste Drehzahlverhältnis 2:1 beträgt, wobei die Drehachse jedes Planetenrads (50, 62) senkrecht zur Drehachse der Achse (36) angeordnet ist.

11. Radnabe nach Anspruch 9, wobei das Planetengetriebe (48) Planetenräder (84, 86, 94, 96) umfasst und das erste Drehzahlverhältnis 2,7:1 oder 1,7:1 beträgt, wobei die Drehachse jedes Planetenrads (84, 86, 94, 96) in Bezug auf die Drehachse der Achse (36) geneigt angeordnet ist.

## Revendications

1. Moyeu de roue (30) pour monter une roue (26) sur un essieu (36) d'un véhicule de travail (10), qui comprend :
un boîtier (32) comprenant un capuchon d'extrémité (44) ; et
un système de réduction (34) comprenant :
une boîte de vitesses à trains épicycloïdaux (48) configurée pour être raccordée, de manière opérationnelle, entre l'essieu (36) et le boîtier (32) ;
un manchon (50) configuré pour se raccorder, d'une manière coulissante, à l'essieu (36) ; et
un dispositif d'actionnement (52) configuré pour faire coulisser le manchon (50),
moyennant quoi :
le système de réduction (34) a une première position opérationnelle dans laquelle le manchon (50) se met en prise avec la boîte de vitesses à trains épicycloïdaux (48) afin de transmettre la force d'entraînement de l'essieu (36) à un premier rapport de vitesse, et une seconde position opérationnelle, dans laquelle le manchon (50) se dégage de la boîte de vitesses à trains épicycloïdaux (48) et se met en prise avec le capuchon d'extrémité (44) du boîtier (32) afin de transmettre la force d'entraînement de l'essieu (36) à un second rapport de vitesse qui est de 1 : 1,
dans lequel le manchon (50) comprend un premier alésage (66) associé avec le dispositif d'actionnement (52) et un second alésage (68) coaxial par rapport au premier alésage (66), dans lequel le premier alésage (66) est configuré pour recevoir une extrémité d'un essieu (36), de sorte que le manchon (50) se met en prise, de manière opérationnelle, avec et coulisse par rapport à l'essieu (36) et le second alésage (68) est orienté à l'opposé du premier alésage (66) et s'étend vers une surface interne du capuchon d'extrémité (44) du boîtier (32),
dans lequel le dispositif d'actionnement (52) comprend une conduite de fluide (74) et une chambre de fluide interne (76) positionnée à l'intérieur du boîtier (32) et raccordée, de manière fluidique, à la conduite de fluide (74),
**caractérisé en ce que** le premier alésage (66) du manchon (50) est raccordé à la conduite de fluide (74) et un joint d'étanchéité (78) est agencé entre la conduite de fluide (74) et un autre alésage à l'intérieur du manchon (50), et la chambre de fluide (76) est définie par le premier alésage (66) et une extrémité de l'essieu (36), de sorte que le remplissage ou le vidage de la chambre de fluide (76) fait coulisser le manchon (50).

2. Moyeu de roue selon la revendication 1, dans lequel le système de réduction (34) comprend en outre un élément de tension (54) qui est au moins partiellement logé dans le second alésage (68) et raccordé entre le capuchon d'extrémité (44) et le manchon (50) et l'élément de tension (54) est configuré pour tendre le manchon (50) dans une direction dans laquelle il peut être mis en prise avec la boîte de vitesses à trains épicycloïdaux (48).

3. Moyeu de roue selon la revendication 2, dans lequel l'élément de tension (54) est un ressort hélicoïdal (54) .

4. Moyeu de roue selon la revendication 2 ou la revendication 3, dans lequel le manchon (50) comprend également un orifice de réception pour recevoir la conduite de fluide (74), l'orifice de réception étant raccordé, de manière fluidique, au premier alésage (66), de sorte que la chambre de fluide (76) est raccordée, de manière fluidique, à la conduite de fluide (74) ; dans la première position opérationnelle, la chambre de fluide (76) est vidée du fluide de sorte qu'une force de l'élément de tension (54) met en prise le manchon (50) avec la boîte de vitesses à trains épicycloïdaux (48), et dans la seconde position opérationnelle, la chambre de fluide (76) est remplie avec du fluide, de sorte qu'une force du fluide à l'intérieur de la chambre de fluide (76) vient à bout de la force de l'élément de tension (54) et met en prise le manchon (50) avec le capuchon d'extrémité (44).

5. Moyeu de roue selon la revendication 4, dans lequel la conduite de fluide (74) s'étend à travers le capuchon d'extrémité (44) du boîtier (32), de manière centrale à travers l'élément de tension (54) et le second alésage (68), et dans l'orifice recevant le manchon (50) pour remplir ou vider, par conséquent, la chambre de fluide (76).

6. Moyeu de roue selon l'une quelconque des revendications précédentes, dans lequel le manchon (50) comprend au moins un groupe de dents (70), agencé de manière circonférentielle autour du périmètre externe du manchon (50), pour se mettre sélectivement en prise avec la boîte de vitesses à trains épicycloïdaux (48) dans la première position opérationnelle et avec le capuchon d'extrémité (44) du boîtier (32) dans la seconde position opérationnelle.

7. Moyeu de roue selon l'une quelconque des revendications précédentes, dans lequel la boîte de vitesses à trains épicycloïdaux (48) comprend un engrenage (56, 80, 90), un engrenage mobile (58, 82, 92), au moins deux engrenages planétaires (60, 62, 84, 86, 94, 96) et un support (64, 88, 98) pour porter les au moins deux engrenages planétaires (60, 62, 84, 86, 94, 96) et le support (64, 88, 98) comprend un orifice de réception pour recevoir, au moins partiellement, le manchon (50).

8. Moyeu de roue selon la revendication 7, dans lequel le manchon (50) ne se met pas opérationnellement en prise avec le support (64, 88, 98) au moyen de rainures ou de dents désignées afin de transmettre la force d'entraînement par ces dernières, de sorte que le manchon (50) peut tourner et coulisser, de manière indépendante, par rapport au support (64, 88, 98) et dans la première position opérationnelle, le manchon (50) se met complètement en prise avec l'engrenage mobile (58, 82, 92) pour transmettre la force d'entraînement par le biais de la boîte de vitesses à trains épicycloïdaux (48).

9. Moyeu de roue selon l'une quelconque des revendications précédentes, dans lequel le premier rapport de vitesse de la première position opérationnelle est de 2 : 1, 2,7 : 1 ou 1,7 : 1.

10. Moyeu de roue selon la revendication 9, dans lequel la boîte de vitesses à trains épicycloïdaux (48) comprend des engrenages planétaires (60, 62) et le premier rapport de vitesse est de 2 : 1, moyennant quoi l'axe de rotation de chaque engrenage planétaire (50, 62) est agencé perpendiculairement à l'axe de rotation de l'essieu (36).

11. Moyeu de roue selon la revendication 9, dans lequel la boîte de vitesses à trains épicycloïdaux (48) comprend des engrenages planétaires (84, 86, 94, 96) et le premier rapport de vitesse est de 2,7 : 1 ou bien de 1,7 : 1, moyennant quoi l'axe de rotation de chaque engrenage planétaire (84, 86, 94, 96) est agencé en étant incliné par rapport à l'axe de rotation de l'essieu (36).
